# EUROPÄISCHE PATENTSCHRIFT

(11) **EP 3 321 217 B1**
(45) Veröffentlichungstag und Bekanntmachung des Hinweises auf die Patenterteilung: **17.07.2019**
(21) Anmeldenummer: 17200493.9
(22) Anmeldetag: 08.11.2017
(51) Int. Cl.: B65G 15/58, B65G 21/20

(54) **FÖRDERSYSTEM ZUM FÖRDERN MINDESTENS EINES WERKSTÜCKS**
CONVEYOR SYSTEM FOR TRANSPORTING AT LEAST ONE WORKPIECE
SYSTÈME DE TRANSPORT DESTINÉ À TRANSPORTER AU MOINS UNE PIÈCE À USINER

(30) Priorität: 09.11.2016 DE 102016121396
(43) Veröffentlichungstag der Anmeldung: 16.05.2018
(73) Patentinhaber: Phoenix Contact GmbH & Co. KG, 32825 Blomberg (DE)
(72) Erfinder: RUPPERT, Jens, 32839 Steinheim (DE)
(74) Vertreter: Janke, Christiane

(56) Entgegenhaltungen:
- EP-A1- 1 153 857
- CN-U- 203 006 288
- DE-U1- 20 313 016
- DE-U1-202011 051 822
- DE-U1-202014 102 796
- JP-A- S59 227 615
- JP-A- 2007 186 340
- JP-U- H0 526 920
- US-A- 3 109 532
- US-A- 4 544 060
- Centre De D?veloppement P?dagogique Pour La Formation G?n?rale En Science Et Technologie: "M?CANISMES DE TRANSMISSION ET DE TRANSFORMATION DE MOUVEMENT TRANSFORMATION DU MOUVEMENT", , 20. März 2014 (2014-03-20), Seiten 1-2, XP055389830, Gefunden im Internet: URL:http://www2.cslaval.qc.ca/cdp/UserFile s/File/telechargement/mecanisme_schema_sym boles.pdf [gefunden am 2017-07-11]

## Beschreibung

Die Erfindung betrifft ein Fördersystem zum Fördern mindestens eines Werkstücks nach dem Oberbegriff des Anspruchs 1 und ein Fördersystem nach dem Oberbegriff des Anspruchs 2 sowie ein Verfahren zum Betreiben eines Fördersystems zum Fördern mindestens eines Werkstücks.

Ein derartiges Fördersystem umfasst eine Fördereinrichtung, an der das Werkstück entlang einer Förderrichtung förderbar ist, wobei eine Fixiereinrichtung, die zumindest ein Magnetelement aufweist, das entlang einer von der Förderrichtung unterschiedlichen Hubrichtung (H) zwischen einer Lösestellung und einer Fixierstellung verstellbar ist, wobei das zumindest eine Magnetelement in der Fixierstellung der Fördereinrichtung (10) im Vergleich zur Lösestellung angenähert ist, um das Werkstück (W) in einer eingenommen Position an der Fördereinrichtung zu fixieren, wobei die Fördereinrichtung eine Auflagefläche, die entlang der Förderrichtung und entlang einer quer zur Förderrichtung und quer zur Hubrichtung gerichteten Querrichtung erstreckt ist, als Auflage für das Werkstück zum Fördern entlang der Förderrichtung aufweist, wobei das zumindest eine Magnetelement an einer der Auflagefläche abgewandten Seite der Fördereinrichtung angeordnet ist, wobei die Fixiereinrichtung ein entlang der Förderrichtung erstrecktes Trägerelement aufweist, an dem das zumindest eine Magnetelement angeordnet ist und das zusammen mit dem zumindest einen Magnetelement entlang der Hubrichtung verstellbar ist, wobei das Trägerelement mit zumindest einem entlang der Förderrichtung verstellbaren Verstellelement gekoppelt ist, wobei durch Verstellen des zumindest einen Verstellelements entlang der Förderrichtung das Trägerelement entlang der Hubrichtung verstellbar ist, wobei dass das zumindest eine Verstellelement über den Eingriff eines Koppelelements in eine Kulisse mit dem Trägerelement gekoppelt ist.

Ferner umfasst ein derartiges Fördersystem eine Fördereinrichtung, an der das Werkstück entlang einer Förderrichtung förderbar ist, wobei eine Fixiereinrichtung, die zumindest ein Magnetelement aufweist, das entlang einer von der Förderrichtung unterschiedlichen Hubrichtung zwischen einer Lösestellung und einer Fixierstellung verstellbar ist, wobei das zumindest eine Magnetelement in der Fixierstellung der Fördereinrichtung im Vergleich zur Lösestellung angenähert ist, um das Werkstück in einer eingenommen Position an der Fördereinrichtung zu fixieren, wobei die Fördereinrichtung eine Auflagefläche, die entlang der Förderrichtung und entlang einer quer zur Förderrichtung und quer zur Hubrichtung gerichteten Querrichtung erstreckt ist, als Auflage für das Werkstück zum Fördern entlang der Förderrichtung aufweist, wobei das zumindest eine Magnetelement an einer der Auflagefläche abgewandten Seite der Fördereinrichtung angeordnet ist, wobei die Fixiereinrichtung ein entlang der Förderrichtung erstrecktes Trägerelement aufweist, an dem das zumindest eine Magnetelement angeordnet ist und das zusammen mit dem zumindest einen Magnetelement entlang der Hubrichtung verstellbar ist, wobei ein Gehäuse mit zwei längs entlang der Förderrichtung erstreckten Gehäuseteilen, zwischen denen das Trägerelement aufgenommen ist.

Ein derartiges Fördersystem kann beispielsweise zum Fördern eines Werkstücks in Form einer Tragschiene oder einer Klemmenleiste dienen. An einer Tragschiene können modulare elektrische Geräte zum Beispiel in Form von Reihenklemmen angeordnet werden, sodass durch Kombination unterschiedlicher elektrischer Geräte an einer Tragschiene eine elektrische Anlage geschaffen werden kann, die beispielsweise eine elektrische Verteilerfunktion oder auch eine Steuerfunktion, z.B. auch im Rahmen einer Datenkommunikation, bereitstellen kann.

Ein derartiges Fördersystem kann beispielsweise bei der automatisierten Schaltschrankmontage zum Einsatz kommen. Bei der automatisierten Schaltschrankmontage sind Tragschienen, wie dies in der WO 2013/056850 A1 beschrieben ist, translatorisch und rotatorisch zu bewegen. Die WO 2013/056850 A1 beschreibt in diesem Zusammenhang eine Dreh-Vorschub-Einheit, bei der eine Tragschiene an einem Tragsystem zu transportieren ist und dafür über eine oder mehrere Befestigungselemente in einem oder mehreren Klemmrahmen eingespannt wird. Über das Tragsystem kann die Tragschiene während eines automatischen Bestückens mit elektrischen Bauelementen, beispielsweise Reihenklemmen, gehalten werden, sodass die Bauelemente und auch weitere Komponenten wie Brücken, Stecker, Verdrahtungen oder Markierungen in automatisierter Weise angebracht werden können.

Bei einem solchen Fördersystem besteht ein Bedürfnis danach, eine Bestückung in automatisierter Weise durchzuführen und auch eine anschließende Beschriftung und Inspektion zu ermöglichen. Hierzu ist erforderlich, dass eine Tragschiene in zuverlässiger Weise in definierter Position fixiert gehalten werden kann, sodass elektrische Geräte wie Reihenklemmen oder dergleichen mittels eines Bestückungssautomaten an eine solche Tragschiene angesetzt werden können.

Bei einer aus der DE 101 04 510 A1 bekannten Vorrichtung zum Transport von Werkstücken wird ein Werkstück an einem umlaufend angetriebenen Fördergurt mittels einer Halteeinrichtung gehalten. Die Halteeinrichtung weist Magnetelemente auf, deren Magnetfeld den Fördergurt durchdringt, sodass Werkstücke während des Transports an dem Fördergurt gehalten werden.

Bei einer aus der DE 197 54 743 C1 bekannten Vorrichtung zum Transport von Gegenständen erzeugt eine Einrichtung ein Magnetfeld an einem Transportband, um Werkstücke magnetisch an dem Transportband zu halten.

Aus der JP 2007 186340 A und der US 3 109 532 A ist ein Fördersystem zum Fördern mindestens eines Werkstücks bekannt, mit einer Fördereinrichtung, an der das Werkstück entlang einer Förderrichtung förderbar ist, wobei eine Fixiereinrichtung, die zumindest ein Magnetelement aufweist, das entlang einer von der Förderrichtung unterschiedlichen Hubrichtung zwischen einer Lösestellung und einer Fixierstellung verstellbar ist, wobei das zumindest eine Magnetelement in der Fixierstellung der Fördereinrichtung im Vergleich zur Lösestellung angenähert ist, um das Werkstück in einer eingenommenen Position an der Fördereinrichtung zu fixieren. Die US 3 109 532 A offenbart ein Fördersystem nach dem Oberbegriff des Anspruchs 1 bzw. des Anspruchs 2.

Aufgabe der vorliegenden Erfindung ist es, ein Fördersystem sowie ein Verfahren zum Betreiben eines Fördersystems zur Verfügung zu stellen, die auf einfache, zuverlässige Weise eine Fixierung eines Werkstücks an einer Fördereinrichtung in einer gerade eingenommenen Position ermöglichen.

Diese Aufgabe wird durch einen Gegenstand mit den Merkmalen des Anspruchs 1 gelöst.

Demnach ist die Kulisse in einer durch die Förderrichtung und die Hubrichtung aufgespannten Ebene entlang einer gekrümmten Bahn erstreckt ist..

Ferner wird die Aufgabe durch einen Gegenstand mit den Merkmalen des Anspruchs 2 gelöst.

Demnach weist die Fixiereinrichtung zumindest ein Hebelelement auf, das verschwenkbar mit dem Trägerelement verbunden ist, wobei durch Verschwenken des zumindest einen Hebelelements das Trägerelement entlang der Hubrichtung verstellbar ist und, dass das zumindest eine Hebelelement an einem entlang der Förderrichtung zu einem Gehäuseteil des Fördersystems verstellbaren Schienenelement schwenkbar angeordnet ist derart, dass durch Verstellen des Schienenelements entlang der Förderrichtung das zumindest eine Hebelelement zum Verstellen des Trägerelements entlang der Hubrichtung verschwenkbar ist, und dadurch, dass das Trägerelement entlang der Hubrichtung an dem Gehäuse der Fördereinrichtung längs geführt ist durch Eingriff eines Bolzens in ein zugeordnetes, entlang der Hubrichtung erstrecktes Langloch.

Die Fixiereinrichtung dient dazu, ein Werkstück, beispielsweise eine Tragschiene oder eine Klemmenleiste, in einer gerade eingenommenen Position festzustellen. In dieser Position soll das Werkstück fixiert sein und soll dabei stillstehen. In der Fixierstellung ist die Fördereinrichtung somit abgeschaltet. Beim Fördern, bei eingeschalteter Fördereinrichtung, befindet sich die Fixiereinrichtung demgegenüber in der Lösestellung, sodass das Werkstück nicht durch Magnetwirkung fixiert ist. Über die Fixiereinrichtung kann ein Werkstück somit an einer axial feststehenden Position (betrachtet entlang der Förderrichtung) an dem Fördersystem gehalten werden, sodass das Werkstück nicht bewegt wird, sondern festgehalten wird und somit zum Beispiel bestückt oder in sonstiger Weise bearbeitet werden kann.

Die Fixierung ist hierbei derart, dass beispielsweise eine Bestückung des Werkstücks, zum Beispiel einer Tragschiene, mit elektrischen Geräten, zum Beispiel Reihenklemmen, in automatisierter Weise möglich ist. Zudem kann bei fixiertem Werkstück beispielsweise eine Beschriftung oder eine Inspektion mittels eines Kamerasystems oder dergleichen erfolgen.

Die Fixierung erfolgt mittels der Fixiereinrichtung, die hierfür zumindest ein verstellbares Magnetelement aufweist. In der Fixierstellung ist das zumindest eine Magnetelement der Fördereinrichtung angenähert, sodass an der Fördereinrichtung vergleichsweise große magnetische Kräfte wirken. Ist das Werkstück, zum Beispiel die Tragschiene, zumindest teilweise aus einem ferromagnetischen Material gefertigt, so wirkt das zumindest eine Magnetelement mit dem Werkstück zusammen und hält dieses in Position.

Aus der Fixierstellung heraus wird das zumindest eine Magnetelement in eine Lösestellung verstellt, in der das zumindest eine Magnetelement (im Vergleich zur Fixierstellung) von der Fördereinrichtung entfernt ist. Die an der Fördereinrichtung wirkenden magnetischen Kräften sind somit abgeschwächt, sodass die Fixierung des Werkstücks an der Fördereinrichtung aufgehoben ist und die Fördereinrichtung das Werkstück in leichtgängiger Weise entlang der Förderrichtung befördern kann.

Dadurch, dass das zumindest eine Magnetelement verstellbar ist, kann das Fördersystem zwischen einem Förderzustand, in dem das Werkstück an der Fördereinrichtung gefördert wird, und einem Fixierzustand, in dem das Werkstück stillstehend in Position gehalten wird (beispielsweise zum Zwecke der automatisierten Bestückung), geschaltet werden. Hierzu kann das zumindest eine Magnetelement in seiner Stellung gegenüber der Fördereinrichtung verändert werden.

Das Verstellen des zumindest einen Magnetelements erfolgt entlang der Hubrichtung, die sich von der Förderrichtung unterscheidet. Erfindungsgemäß ist die Hubrichtung senkrecht zur Förderrichtung gerichtet. Denkbar und möglich ist aber auch, dass die Hubrichtung unter einem schrägen Winkel zur Förderrichtung erstreckt ist.

In einer Ausgestaltung weist die Fördereinrichtung eine Auflagefläche auf, die als Auflage für das Werkstück zum Fördern entlang der Förderrichtung dient. Die Fördereinrichtung kann beispielsweise als Förderband oder durch eine Kette oder dergleichen ausgebildet sein. Denkbar und möglich ist auch, die Fördereinrichtung durch eine Anordnung von aneinander angereihten Rollen zu bilden, an denen ein Werkstück entlang der Förderrichtung gefördert werden kann. Die Auflagefläche erstreckt sich allgemein flächig entlang der Förderrichtung und entlang einer quer zur Förderrichtung und quer zur Hubrichtung gerichteten Querrichtung.

Die Hubrichtung ist senkrecht zur Auflagefläche gerichtet. Das zumindest eine Magnetelement ist somit in senkrechter Richtung relativ zur Auflagefläche zwischen seiner Fixierstellung und seiner Lösestellung verstellt.

Das mindestens eine Magnetelement ist an einer der Auflagefläche abgewandten Seite der Fördereinrichtung angeordnet. Während das Werkstück somit an der Auflagefläche gefördert wird, ist das zumindest eine Magnetelement der Fixiereinrichtung rückseitig dieser Auflagefläche angeordnet. Die von dem zumindest einen Magnetelement erzeugten Magnetfelder durchdringen hierbei (zumindest in der Fixierstellung) die Auflagefläche und wirken mit dem Werkstück an der Fördereinrichtung zusammen, um das Werkstück in einer gerade eingenommenen Stellung zu fixieren, wenn das mindestens eine Magnetelement sich in der Fixierstellung befindet.

Erfindungsgemäß weist die Fixiereinrichtung ein entlang der Förderrichtung erstrecktes Trägerelement auf, an dem das zumindest eine Magnetelement angeordnet ist und das zusammen mit dem zumindest einen Magnetelement entlang der Hubrichtung verstellt wird. Beispielsweise können mehrere Magnetelemente entlang der Förderrichtung zueinander versetzt an dem Trägerelement angeordnet sein. Die Magnetelemente können hierbei als gesonderte Elemente an dem Trägerelement, insbesondere an einer der Fördereinrichtung zugewandten Oberseite des Trägerelements, befestigt sein. Denkbar und möglich ist aber auch, an dem Trägerelement eine Magnetanordnung in Form eines (durchgängigen) Magnetbands oder dergleichen zu befestigen.

Das zumindest eine Magnetelement kann beispielsweise durch einen Neodym-Magnet verwirklicht sein.

In einer Ausgestaltung weist das Fördersystem ein Gehäuse mit zwei längs entlang der Förderrichtung erstreckten Gehäuseteilen auf, die beidseits der Fördereinrichtung angeordnet sind und somit eine seitliche Begrenzung für das Gehäuse bereitstellen. Zwischen den Gehäuseteilen ist das Trägerelement aufgenommen, sodass das Trägerelement im Inneren des Gehäuses verstellbar ist.

Vorzugsweise ist das Trägerelement hierbei entlang der Hubrichtung an zumindest einem der Gehäuseteile geführt. Aufgrund der Führung ist das Trägerelement ausschließlich entlang der Hubrichtung bewegbar und wird somit bei Verstellen entlang der Hubrichtung, zum Beispiel senkrecht zur Auflagefläche, bewegt.

Die Führung des Trägerelements an einem oder an beiden der Gehäuseteile ist über den Eingriff eines Bolzens in ein Langloch erfolgen. Beispielsweise können zwischen den seitlichen Gehäuseteilen Bolzen erstreckt sein, die durch längs entlang der Hubrichtung erstreckte Langlöcher des Trägerelements hindurch greifen, sodass das Trägerelement in definierter Weise zwischen den Gehäuseteilen geführt ist.

Während das Trägerelement entlang der Hubrichtung zu verstellen ist, kann ein Verstellelement in kraftumlenkender Weise mit dem Trägerelement gekoppelt sein, sodass das Verstellelement zum Verstellen des Trägerelements in eine Verstellrichtung verstellt wird, die sich von der Hubrichtung unterscheidet. Beispielsweise kann das Verstellelement entlang der Förderrichtung zu bewegen sein, sodass durch Verschieben des Verstellelements entlang der Förderrichtung das Trägerelement bewegt wird.

Die kraftumlenkende Kopplung des Verstellelements mit dem Trägerelement kann beispielsweise durch den Eingriff eines Koppelelements, beispielsweise in Form eines Bolzens, in eine Kulisse verwirklicht sein. Beispielsweise kann an dem Trägerelement ein feststehendes Koppelelement in Form eines vorstehenden Bolzens oder Zapfens angeordnet sein, das in eine Kulisse des Verstellelements eingreift, wobei die Kulisse derart ausgebildet ist, dass bei einem Verstellen des Verstellelements eine Kraft entlang der Hubrichtung auf das Trägerelement ausgeübt und das Trägerelement somit entlang der Hubrichtung verstellt wird.

Denkbar und möglich ist aber auch, in kinematischer Umkehr, an dem Verstellelement ein (feststehendes) Koppelelement anzuordnen, das in eine Kulisse an dem Trägerelement eingreift und darüber eine kraftumlenkende Kopplung bewirkt.

Gemäß der ersten Lehre der Erfindung ist die Kulisse in einer durch die Förderrichtung und die Hubrichtung aufgespannten Ebene entlang einer gekrümmten Bahn erstreckt. Die Kulisse erstreckt sich somit, in diesem Fall, nicht geradlinig, sondern ist gekrümmt, was ermöglicht, eine vorteilhafte Kraftwirkung des Verstellelements auf das Trägerelement einzustellen. So sind die magnetischen Anziehungskräfte zwischen dem einen oder den mehreren an dem Trägerelement angeordneten Magnetelementen und dem an der Fördereinrichtung geführten Werkstück in der Fixierstellung groß, nehmen bei Verstellen des Trägerelements in Richtung der Lösestellung und somit bei Entfernen des einen oder der mehreren Magnetelemente von dem Werkstück aber in stark nichtlinearer Weise ab. Die Kulisse ist somit vorzugsweise derart geformt, dass zu Beginn der Verstellbewegung aus der Fixierstellung heraus zunächst ein vergleichsweise großer Verstellweg des Verstellelements zu einem vergleichsweise geringen Verstellweg an dem Trägerelement führt, sodass eine kraftgünstige Verstellung des Trägerelements aus der Fixierstellung heraus möglich ist. Bei weiterer Verstellung in Richtung der Lösestellung kann dann bei gleichem Verstellweg des Verstellelements ein größerer Verstellweg am Trägerelement zurückgelegt werden, sodass das Trägerelement in die Lösestellung abgesenkt wird.

In alternativer Ausgestaltung, die nicht Teil der Erfindung ist, ist es selbstverständlich auch möglich, die Kulisse geradlinig erstreckt auszubilden. In diesem Fall ist die Kulisse schräg zur Hubrichtung gerichtet.

Das Verstellelement kann beispielsweise, in einer Ausgestaltung, an einem Gehäuseteil des Gehäuses des Fördersystems geführt sein. Das Verstellelement kann somit in geführter Weise an dem Gehäuseteil bewegt werden. Beispielsweise weist hierzu das Verstellelement einen erhabenen Abschnitt auf, der in eine entlang der Verstellrichtung des Verstellelements erstreckte Aussparung des Gehäuseteils eingreift, sodass über diesen Eingriff eine definierte Führung für das Verstellelement am Gehäuse bereitgestellt wird.

In einer vorteilhaften Ausgestaltung sind mehrere Verstellelemente entlang der Förderrichtung zueinander versetzt. Mehrere Verstellelemente sind somit entlang der Förderrichtung beabstandet zueinander, sodass ein Verstellen des Trägerelements durch (gemeinsames) Betätigen der Verstellelemente an entlang der Förderrichtung zueinander beabstandeten Orten bewirkt wird, was eine günstige Krafteinleitung für ein Verstellen des Trägerelements entlang der Hubrichtung - ohne die Gefahr eines Verkippens - ermöglicht.

Zudem können die Verstellelemente Paare aus je zwei quer zueinander versetzten Verstellelementen, die das Trägerelement zwischen sich aufnehmen, ausbilden. Es können hierbei mehrere entlang der Förderrichtung zueinander versetzte Paare von Verstellelementen bereitgestellt werden, sodass eine definierte, kraftgünstige Verstellung des Trägerelements entlang der Hubrichtung bei symmetrischer Krafteinleitung entlang der gesamten Länge des Trägerelements möglich wird.

Die Verstellelemente können gemeinsam an einem Schienenelement angeordnet sein, das entlang der Förderrichtung verstellbar ist, sodass durch Verstellen des Schienenelements die Verstellelemente gemeinsam zum Verstellen des Trägerelements bewegt werden können.

Gemäß einer zweiten Lehre der Erfindung weist die Fixiereinrichtung einen oder mehrere Hebelelemente auf, die verschwenkbar mit dem Trägerelement verbunden sind. Die Hebelelemente wirken derart mit dem Trägerelement zusammen, dass durch Verschwenken der Hebelelemente das Trägerelement entlang der Hubrichtung verstellt werden kann.

Das Trägerelement ist entlang der Hubrichtung an einem Gehäuse der Fördereinrichtung längs geführt durch Eingriff eines Bolzens in ein zugeordnetes, entlang der Hubrichtung erstrecktes Langloch. Durch Verschwenken eines oder mehrerer Hebelelemente kann das Trägerelement entlang der Hubrichtung verstellt werden, sodass das zumindest eine an dem Trägerelement angeordnete Magnetelement zwischen der Fixierstellung und der Lösestellung verstellt werden kann.

Gemäß der zweiten Lehre der Erfindung sind das eine oder die mehreren Hebelelemente mit einem entlang der Förderrichtung zu einem Gehäuseteil des Fördersystems verstellbaren Schienenelement schwenkbar verbunden. Durch Verstellen des Schienenelements entlang der Förderrichtung werden - aufgrund der Kopplung mit dem Schienenelement - das eine oder die mehreren Hebelelemente an dem Schienenelement verschwenkt, sodass dadurch in kraftumlenkender Weise eine Verstellkraft in das Trägerelement eingeleitet und dieses entlang der Hubrichtung zwischen der Fixierstellung und der Lösestellung verstellt wird. Das längs entlang der Förderrichtung zu bewegende Schienenelement und das vertikal entlang der Hubrichtung zu bewegende Trägerelement sind somit über das eine oder die mehreren Hebelelemente miteinander gekoppelt derart, dass eine Längsbewegung des Schienenelements in eine Hubbewegung des Trägerelements umgesetzt wird.

Aufgrund der Kopplung über ein oder mehrere Hebelelemente kann eine günstige Krafteinleitung in das Trägerelement erreicht werden. So kann - aufgrund der Kopplung über ein oder mehrere Hebelelemente und der Umsetzung der linearen Bewegung des Schienenelements in eine Schwenkbewegung der Hebelelemente - bei einem Lösen aus der Fixierstellung zu Beginn der Verstellbewegung ein vergleichsweise großer Verstellweg des Schienenelements zu einem vergleichsweise kleinen Verstellweg des Trägerelements führen, sodass eine vergleichsweise kleine Verstellkraft am Schienenelement in eine vergleichsweise große Verstellkraft am Trägerelement umgesetzt wird. Dies kann günstig sein, um das zumindest eine Magnetelemente am Trägerelement aus seiner magnetischen Anziehung mit einem an dem Fördersystem angeordneten Werkstück zu lösen. Über die Hebelelementkopplung kann somit eine insbesondere für das Lösen der Fixiereinrichtung aus der Fixierstellung günstige Übersetzung/Untersetzung bereitgestellt werden.

In einer Ausgestaltung ist das Schienenelement über ein oder mehrere Führungselemente längs entlang der Förderrichtung an dem Gehäuseteil des Fördersystems geführt. Beispielsweise kann das Schienenelement über mehrere Paare von Führungselementen, die entlang der Förderrichtung zueinander beabstandet sind und das Schienenelement somit an axial zueinander versetzten Orten mit dem Gehäuse der Fördereinrichtung koppeln, geführt sein, wobei jedes Paar vorzugsweise durch zwei beidseits des Gehäuses der Fördereinrichtung angeordnete, einander gegenüberliegende Führungselemente gebildet ist.

Jedes Führungselement kann beispielsweise ein Gleitelement aufweisen, das zum Beispiel in einer zugeordneten Aussparung, zum Beispiel in Form eines Langlochs, an dem Gehäuse der Fördereinrichtung längs entlang der Förderrichtung geführt ist.

In einer vorteilhaften Ausgestaltung ist ein jedes Hebelelement in der Fixierstellung mit einem zugeordneten Führungselement in Anlage. In der Fixierstellung sind das Hebelelement und das Führungselement somit einander angenähert und in Anschlag miteinander, sodass die Fixierstellung durch den Anschlag zwischen dem Hebelelement und dem Führungselement definiert ist und das Schienenelement insbesondere nicht weiter zum Bewegen des Trägerelements über die Fixierstellung hinaus verstellt werden kann.

Beispielsweise kann das zumindest eine Hebelelement in der Fixierstellung im Wesentlichen senkrecht zu der Förderrichtung und damit zu dem Schienenelement erstreckt sein.

Ist das Schienenelement über mehrere Hebelelemente mit dem Trägerelement gekoppelt, können beispielsweise mehrere Paare von Hebelelementen - gebildet jeweils durch zwei beidseits des Gehäuses der Fördereinrichtung angeordnete, einander gegenüberliegende Hebelelemente - das Schienenelement mit dem Trägerelement verbinden. Die Paare von Hebelelementen können entlang der Förderrichtung zueinander versetzt an dem Schienenelement angeordnet sein und sind ansprechend axial entlang der Förderrichtung zueinander beabstandet. Ein solcher axialer Versatz zwischen den Paaren von Hebelelementen kann eine günstige Krafteinleitung von dem Schienenelement in das Trägerelement ermöglichen.

Die Hebelelemente eines Paares von Hebelelementen können hierbei außerhalb des Gehäuses angeordnet sein und über zum Beispiel ein Achselement schwenkbar mit dem Trägerelement verbunden sein. Das Achselement durchgreift eine Gehäusewandung des Gehäuses beispielsweise an einem Langloch, über das das Trägerelement zudem vorzugsweise entlang der Hubrichtung an dem Gehäuse geführt ist.

Das Verstellen des Schienenelements kann bei den vorangehend beschriebenen Ausgestaltungen auf ganz unterschiedliche Weise erfolgen. Beispielsweise kann ein Nutzer das Schienenelement händisch betätigen. Denkbar und möglich ist aber auch, eine elektrische oder pneumatische Antriebsvorrichtung vorzusehen, um das Schienenelement in automatisierter, gesteuerter Weise zum Betätigen der Fixiereinrichtung zu bewegen.

In einer Ausgestaltung weist das Fördersystem zusätzlich eine Erkennungseinrichtung beispielsweise in Form einer Lichtschranke auf, die zum Erkennen einer Position eines Werkstücks an der Fördereinrichtung dient. Die Erkennungseinrichtung kann beispielsweise eine Steuerungsaufgabe übernehmen und hierzu mit einer Steuer- und Auswerteeinrichtung zusammenwirken. Wird mittels der Erkennungseinrichtung erkannt, dass ein an der Fördereinrichtung gefördertes Werkstück eine vorbestimmte Position an der Fördereinrichtung erreicht hat, kann beispielsweise bewirkt werden, dass die Fördereinrichtung gestoppt wird, um mittels der Fixiereinrichtung das Werkstück in der gerade eingenommenen Position zu fixieren und auf diese Weise beispielsweise eine automatisierte Bestückung einer Tragschiene zu ermöglichen.

Die Aufgabe wird auch durch ein Verfahren zum Betreiben eines wie vorstehend beschriebenen, aus- und weitergebildeten Fördersystems zum Fördern mindestens eines Werkstücks gelöst. Bei dem Verfahren wird das Werkstück entlang einer Förderrichtung an einer Fördereinrichtung gefördert. Hierbei ist vorgesehen, dass zum Fixieren des Werkstücks in einer eingenommenen Position an der Fördereinrichtung zumindest ein Magnetelement einer Fixiereinrichtung entlang einer von der Förderrichtung unterschiedlichen Hubrichtung zwischen einer Lösestellung und einer Fixierstellung verstellt wird, wobei das zumindest eine Magnetelement in der Fixierstellung der Fördereinrichtung im Vergleich zur Lösestellung angenähert ist, wobei die Fixiereinrichtung zumindest ein Hebelelement aufweist, das verschwenkbar mit dem Trägerelement verbunden ist, wobei durch Verschwenken des zumindest einen Hebelelements das Trägerelement entlang der Hubrichtung verstellt wird und, dass das zumindest eine Hebelelement an einem entlang der Förderrichtung zu einem Gehäuseteil des Fördersystems verstellbaren Schienenelement schwenkbar angeordnet wird derart, dass durch Verstellen des Schienenelements entlang der Förderrichtung das zumindest eine Hebelelement zum Verstellen des Trägerelements entlang der Hubrichtung verschwenkt wird, und dadurch, dass das Hebelelement zum einen über eine Koppeleinrichtung in Form eines Achselements mit dem Trägerelement verschwenkt wird und zum anderen über eine Koppeleinrichtung in Form eines Achselements mit dem Schienenelement gekoppelt wird, wobei durch Verstellen des Schienenelements die Koppeleinrichtung des Hebelelements in einem zugeordneten Langloch eines der Gehäuseteile des Gehäuses entlang der Hubrichtung bewegt wird, sodass das Trägerelement innerhalb des Gehäuses entlang der Hubrichtung verstellt wird.

Die vorangehend für das Fördersystem beschriebenen Vorteile und vorteilhaften Ausgestaltungen finden analog auch auf das Verfahren Anwendung. Es soll somit vollumfänglich auf das vorangehend Ausgeführte verwiesen werden.

Bei dem Verfahren kann vorgesehen sein, dass die Fördereinrichtung zum Fixieren des Werkstücks angehalten wird. Ist die Fördereinrichtung angehalten, kann das zumindest eine Magnetelement der Fixiereinrichtung aus der Lösestellung in Richtung der Fixierstellung verstellt werden, um auf diese Weise ein an der Fördereinrichtung gefördertes Werkstück in seiner gerade eingenommenen Lage zu fixieren. Ist das Werkstück fixiert, können beispielsweise elektrische Geräte in Form von Reihenklemmen oder dergleichen an das Werkstück, zum Beispiel eine Tragschiene, angesetzt werden oder elektrische Geräte können beschriftet oder inspiziert werden.

Ist die Fördereinrichtung angehalten worden, kann die Position des Werkstücks gegebenenfalls nicht eindeutig bestimmt sein, zum Beispiel aufgrund eines Nachlaufens des Antriebs der Fördereinrichtung. Nach dem Fixieren kann daher vorgesehen sein, die Position des Werkstücks an der Fördereinrichtung in exakter Weise zu vermessen, um eine automatisierte Bestückung, Beschriftung und/oder Inspektion zu ermöglichen, wobei zur Vermessung eine automatische Messeinrichtung des Fördersystems, zum Beispiel unter Verwendung eines Kamerasystems oder eines Lichtschrankensystems, erfolgen kann.

Das Steuern der Fördereinrichtung kann hierbei über ein Erkennungssystem, beispielsweise in Form einer Lichtschranke, erfolgen. Wird mittels der Erkennungseinrichtung erkannt, dass ein an der Fördereinrichtung gefördertes Werkstück eine vorbestimmte Position erreicht hat (beispielsweise indem das Werkstück in eine Lichtschranke einläuft), so kann ein Steuersignal erzeugt werden, das zum Anhalten der Fördereinrichtung führt. Sodann kann die Fixiereinrichtung zum Fixieren des Werkstücks in der gerade eingenommenen Position betätigt werden.

Der der Erfindung zugrunde liegende Gedanke soll nachfolgend anhand der in den Figuren dargestellten Ausführungsbeispiele näher erläutert werden. Es zeigen:
- Fig. 1: eine perspektivische Ansicht eines Ausführungsbeispiels eines Fördersystems;
- Fig. 2A: eine Seitenansicht des Fördersystems;
- Fig. 2B: eine stirnseitige Ansicht des Fördersystems;
- Fig. 2C: eine vergrößerte Ansicht im Ausschnitt A gemäß Fig. 2A;
- Fig. 2D: eine vergrößerte Schnittansicht im Ausschnitt B gemäß Fig. 2A;
- Fig. 3: eine perspektivische, gesonderte Darstellung einer Fixiereinrichtung des Fördersystems;
- Fig. 4A: eine Ansicht der Fixiereinrichtung zusammen mit einem Gehäuseteil eines Gehäuses des Fördersystems;
- Fig. 4B: eine vergrößerte Darstellung im Ausschnitt C gemäß Fig. 4A;
- Fig. 5A: eine Seitenansicht eines weiteren Ausführungsbeispiels eines Fördersystems;
- Fig. 5B: eine stirnseitige Ansicht des Fördersystems;
- Fig. 5C: eine Draufsicht auf das Fördersystem;
- Fig. 6A: eine ausschnittsweise vergrößerte Ansicht im Ausschnitt A gemäß Fig. 5A;
- Fig. 6B: eine teilweise freigeschnittene Ansicht des Ausschnitts gemäß Fig. 6A;
- Fig. 6C: eine Schnittansicht entlang der Linie B-B gemäß Fig. 6B;
- Fig. 6D: eine Schnittansicht entlang der Linie A-A gemäß Fig. 5B;
- Fig. 7A: eine Seitenansicht des Fördersystems in der Stellung der Fixiereinrichtung gemäß Fig. 5A;
- Fig. 7B: eine Seitenansicht des Fördersystems, bei verstellter Fixiereinrichtung;
- Fig. 8A: eine ausschnittsweise vergrößerte Ansicht im Ausschnitt A1 gemäß Fig. 7A; und
- Fig. 8B: eine ausschnittsweise vergrößerte Ansicht im Ausschnitt A2 gemäß Fig. 7B.

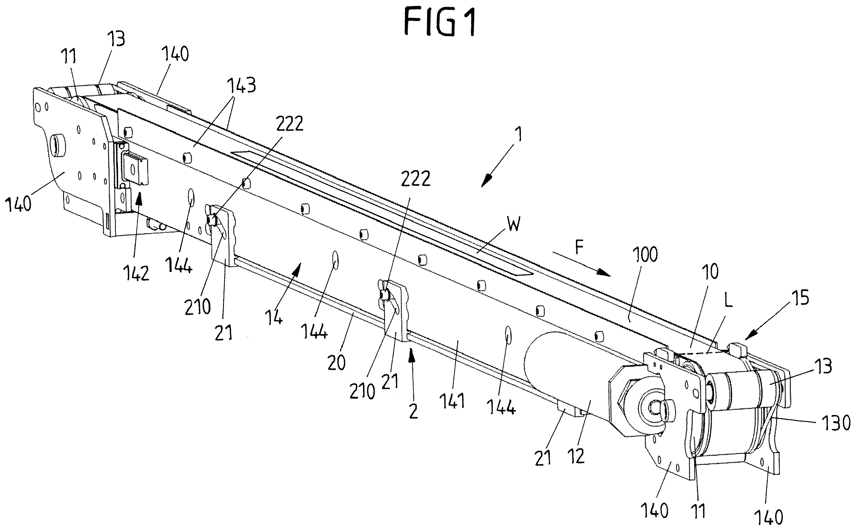

Fig. 1 zeigt eine perspektivische Ansicht eines Ausführungsbeispiels eines Fördersystems 1, das eine Fördereinrichtung 10 in Form eines umlaufenden, um Antriebsrollen 11 herumverlegten, flexiblen Förderbands aufweist. An einer nach außen weisenden Auflagefläche 100 der Fördereinrichtung 10 können ein oder mehrere Werkstücke W in Form einer oder mehrerer Tragschienen oder Klemmleisten gefördert werden.

Das Fördersystem 1, wie es in Fig. 1 beispielhaft dargestellt ist, kann beispielsweise Bestandteil einer Dreh-Vorschub-Einheit sein, wie sie in der WO 2013/056850 A1 beschrieben ist. Mittels des Fördersystems 1 kann ein Werkstück W entlang einer linearen, geradlinigen Förderrichtung F translatorisch transportiert werden, wobei das Fördersystem 1 an einer weiteren, übergeordneten Trageinrichtung angeordnet sein kann, mittels derer eine rotatorische Bewegung vorgenommen werden kann.

Das Fördersystem 1 weist ein Gehäuse 14 mit seitlichen Gehäuseteilen 141 auf, die das Fördersystem 1 seitlich begrenzen. An oberen Kanten der seitlichen Gehäuseteile 141 sind Längsführungselemente 143 in Form von Längsschienen angeordnet, die die Auflagefläche 100 der Fördereinrichtung 10 überragen und somit eine seitliche Führung für ein auf der Auflagefläche 100 gefördertes Werkstück W bereitstellen.

Mit den seitlichen Gehäuseteilen 141 sind, an beiden Enden, weitere Gehäuseteile 140 verbunden, zwischen denen die Antriebsrollen 11 gelagert sind. Eine vordere Antriebsrolle 11 (in Fig. 1 vorne dargestellt) ist hierbei mit einem Antriebsmotor 12 gekoppelt und über diesen Antriebsmotor 12 antreibbar, sodass über die vordere Antriebsrolle 11 die Fördereinrichtung 10 zum Fördern eines daran angeordneten Werkstücks W in Bewegung versetzt werden kann.

Die hinteren Gehäuseteile 140 sind demgegenüber über eine Spanneinrichtung 142 zusammen mit der zwischen den Gehäuseteilen 140 gelagerten hinteren Antriebsrolle 11 (die passiv mitlaufen oder ebenfalls motorisch angetrieben sein kann) gegenüber den seitlichen Gehäuseteilen 141 längs entlang der Förderrichtung F einstellbar. Dies ermöglicht ein Spannen der Fördereinrichtung 10 in Form des Förderbands.

Zwischen den beiden Paaren von Gehäuseteilen 140 an den Enden des Fördersystems 1 sind zudem, der Fördereinrichtung 10 in Form des Förderbands jeweils vorgelagert, Übergangsrollen 13 angeordnet, die über ein Riemenelemente 130 jeweils mit der benachbarten Antriebsrolle 11 gekoppelt sind, sodass bei einem Verdrehen der jeweiligen Antriebsrolle 11 die Übergangsrolle 13 mitbewegt wird. Die Übergangsrollen 13 ermöglichen ein Ansetzen mehrerer Fördersysteme 1 längs entlang der Förderrichtung F aneinander und schaffen einen Übergang zwischen aneinander angrenzenden Fördersystemen 1, sodass Werkstücke W entlang mehrerer aneinander anschließender Fördersysteme 1 gefördert werden können.

Mittels des Fördersystems 1 können Werkstücke W entlang einer geradlinigen Förderrichtung F beispielsweise im Rahmen einer automatisierten Schaltschrankmontage gefördert werden. Um hierbei ein Fixieren eines Werkstücks W in einer gerade eingenommenen Stellung an der Fördereinrichtung 10 zu bewirken, um beispielsweise ein Werkstück W in Form einer Tragschiene mit elektrischen Geräten zum Beispiel in Form von Reihenklemmen oder dergleichen bestücken zu können, ist eine Fixiereinrichtung 2 vorgesehen, die verstellbar ist, um ein Werkstück W wahlweise an der Fördereinrichtung 10 festzusetzen oder zum Fördern freizugeben.

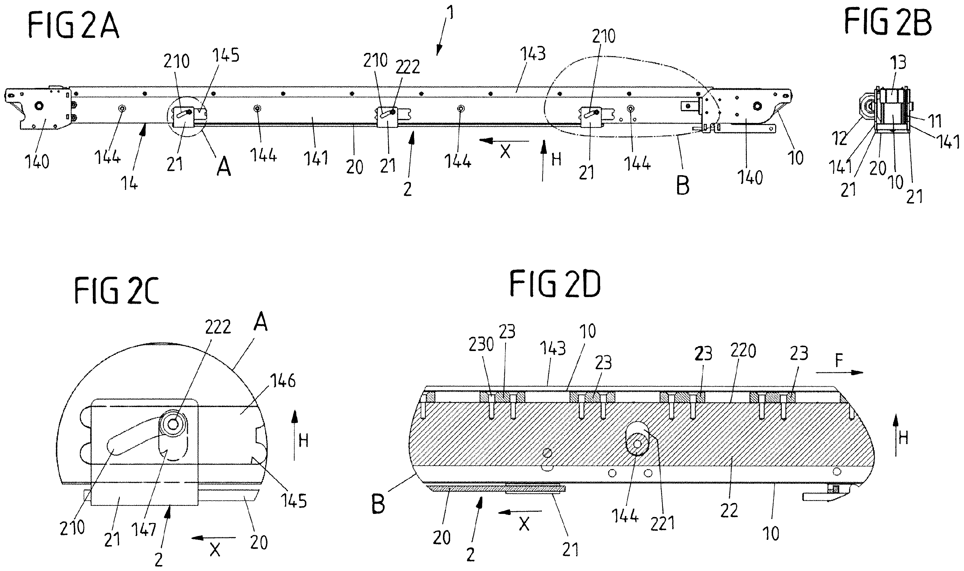

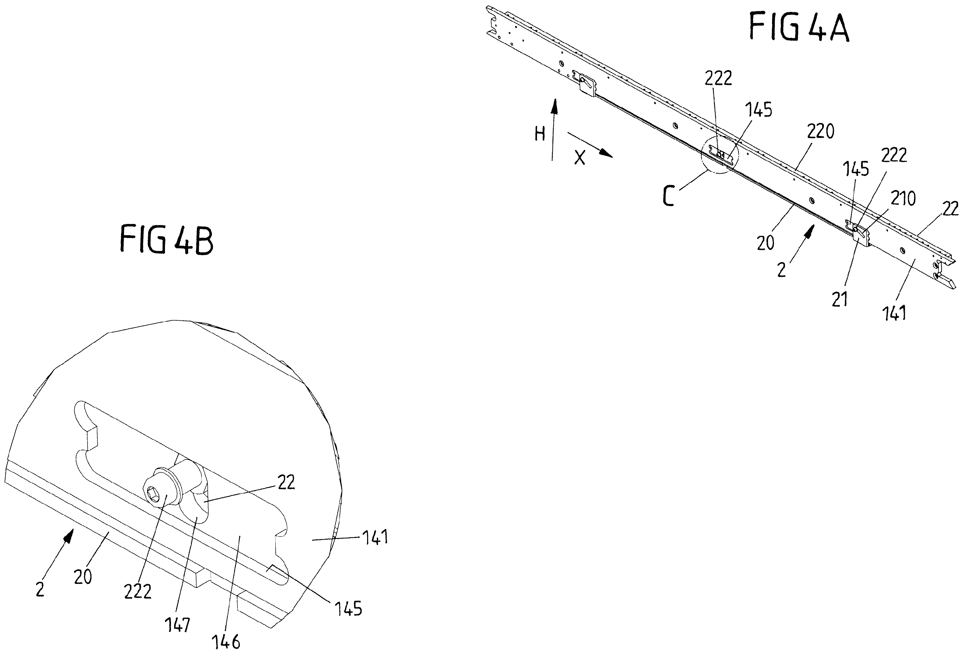

Fig. 2A-2D bis Fig. 4A, 4B zeigen Details eines Ausführungsbeispiels einer solchen Fixiereinrichtung 2.

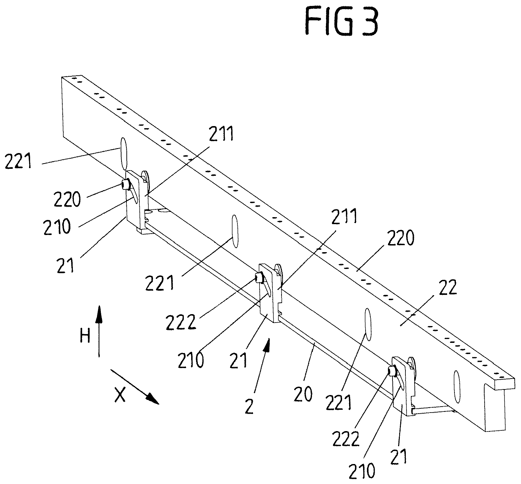

Die Fixiereinrichtung 2 weist ein zwischen den seitlichen Gehäuseteilen 141 des Gehäuses 14 des Fördersystems 1 aufgenommenes Trägerelement 22 in Form einer längs entlang der Förderrichtung F erstreckten Schiene (siehe Fig. 3) auf, das eine Oberseite 220 aufweist, die dem die Auflagefläche 100 ausbildenden Bandabschnitt der Fördereinrichtung 10 zugewandt ist und an der eine Mehrzahl von axial zueinander versetzten Magnetelementen 23, beispielsweise in Form von Neodym-Magneten, angeordnet ist.

Die Magnetelemente 23 sind unterhalb der Fördereinrichtung 10 rückseitig der Auflagefläche 100, an der die Werkstücke W zu transportieren sind, angeordnet und dienen dazu, ein Werkstück W in einer gerade eingenommenen Position wahlweise festzustellen oder freizugeben.

Das Trägerelement 22 kann beispielsweise aus einem ferromagnetischen Material gefertigt sein und kann somit einen magnetischen Rückschluss für die daran angeordneten Magnetelemente 23 bereitstellen.

Das Trägerelement 22 ist entlang einer senkrecht zur Auflagefläche 100 gerichteten Hubrichtung H (siehe zum Beispiel Fig. 2D) zwischen den Gehäuseteilen 141 verstellbar und ist hierzu über Führungselemente 144 in Form von zwischen den Gehäuseteilen 141 erstreckten Bolzen, die in Langlöcher 221 des Trägerelements 22 eingreifen, entlang der Hubrichtung H in definierter Weise geführt. Das Trägerelement 22 ist somit entlang der Hubrichtung H innerhalb des Gehäuses 14 und somit gegenüber dem die Auflagefläche 100 ausbildenden Bandabschnitt der Fördereinrichtung 10 verstellbar.

Außerhalb des Gehäuses 14 sind, bei dem dargestellten Ausführungsbeispiel, beidseits je eine Mehrzahl von entlang der Förderrichtung F zueinander versetzten Verstellelementen 21 angeordnet, die aus Kunststoff gefertigt und gemeinsam an einem Schienenelement 20 gehalten sind. Jeweils zwei Verstellelemente 21 liegen sich hierbei paarweise gegenüber, wobei mehrere Paare von Verstellelementen 21 entlang der Förderrichtung F zueinander versetzt an dem Schienenelement 20 angeordnet sind.

Das Schienenelement 20 ist entlang einer kollinear zur Förderrichtung F gerichteten Verstellrichtung X axial zu dem Gehäuse 14 verstellbar. Die Verstellelemente 21 weisen hierbei jeweils, wie beispielsweise aus Fig. 3 ersichtlich ist, einen nach innen vorspringenden, erhabenen Abschnitt 211 auf, der in eine jeweils zugeordnete Aussparung 145 an dem Gehäuseteil 141 eingreift, wie dies aus Fig. 4A und der vergrößerten Ansicht gemäß Fig. 4B ersichtlich ist. Über den Eingriff des Abschnitts 211 in die jeweils zugeordnete Aussparung 145 wird eine Längsführung entlang der Förderrichtung F eines jeden Verstellelements 21 an dem zugeordneten Gehäuseteil 141 bereitgestellt, sodass die Einheit der Verstellelemente 21 und des Schienenelements 20 in geführter Weise entlang der Förderrichtung F an dem Gehäuse 14 bewegbar ist.

Die Verstellelemente 21 weisen jeweils eine Kulisse 210 auf, die sich entlang einer gekrümmten Bahn erstreckt und durch die hindurch ein feststehend an dem Trägerelement 22 angeordnetes, zugeordnetes Kopplungselement 222 in Form eines Bolzens greift, wie dies ebenfalls aus Fig. 4A und 4B ersichtlich ist.

Die Koppelelemente 222 sind jeweils in einer Längsöffnung 147 am Boden 146 der zugeordneten Aussparung 145 längs entlang der Hubrichtung H geführt, sodass darüber eine zusätzliche Führung des Trägerelements 22 an den Gehäuseteilen 141 bereitgestellt wird.

Durch Verstellen des Schienenelements 20 mit den daran angeordneten Verstellelementen 21 entlang der Förderrichtung F kann das Trägerelement 22 entlang der Hubrichtung H verstellt werden, um die an dem Trägerelement 22 angeordneten Magnetelemente 23 der Auflagefläche 100 anzunähern oder von dieser zu entfernen. In einer Fixierstellung sind die Magnetelemente 23 hierbei, wie aus Fig. 2B ersichtlich, der Auflagefläche 100 angenähert, sodass das durch die Magnetelemente 23 bewirkte Magnetfeld die Fördereinrichtung 10 durchdringt und ein an der Auflagefläche 100 gefördertes Werkstück W in seiner gerade eingenommenen Position feststellt.

Die Magnetelemente 23 sind in diese Fixierstellung bewegbar, indem das Schienenelement 20 in die Verstellrichtung X bewegt wird, wie dies in Fig. 2A dargestellt ist. In der Fixierstellung befinden sich die Koppelelemente 222 an einem oberen Ende der Kulissen 210 der Verstellelemente 21, sodass das Trägerelement 22 innerhalb des Gehäuses 4 in Richtung der Auflagefläche 100 angehoben ist.

Zum Verstellen des Trägerelements 22 zusammen mit den daran angeordneten Magnetelementen 23 aus der Fixierstellung heraus kann das Schienenelement 20 entgegen der Verstellrichtung X bewegt werden, sodass die Koppelelemente 222 innerhalb der Kulissen 210 der Verstellelemente 21 gleiten und dadurch das Trägerelement 22 entgegen der Hubrichtung H abgesenkt wird. Die Magnetelemente 23 werden somit von der Auflagefläche 100 entfernt, sodass die Magnetkräfte an der Auflagefläche 100 (stark) abgeschwächt werden und somit ein Werkstück W freigegeben wird.

Aufgrund der Krümmung der Kulissen 210 ist die Absenkung pro Verstellweg zunächst (zu Beginn der Verstellbewegung aus der Fixierstellung heraus) gering, was den nichtlinear abnehmenden Magnetkräften Rechnung trägt. Die Magnetelemente 23 können somit in kraftgünstiger Weise aus ihrer Fixierstellung, in der sie magnetisch anziehend einem Werkstück W angenähert sind, heraus bewegt werden. Bei weiterer Verstellung ist die Absenkung pro Verstellweg dann größer, entsprechend der Krümmung der Kulissen 210.

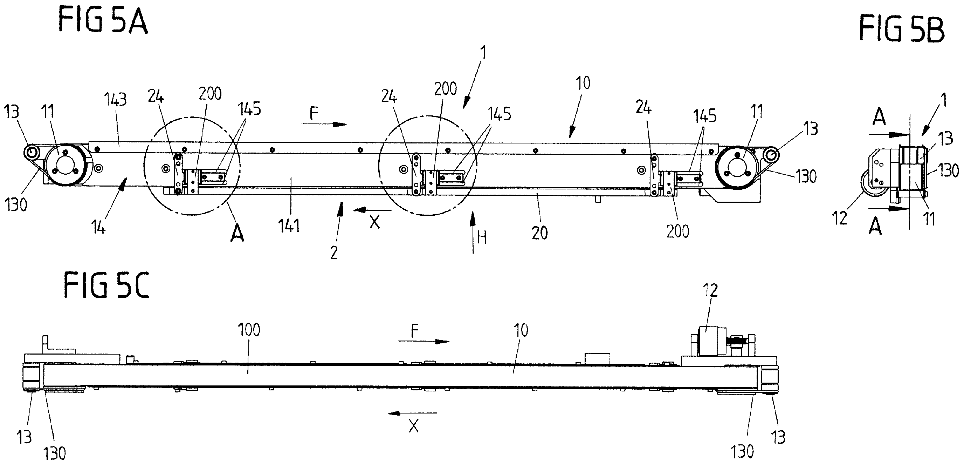

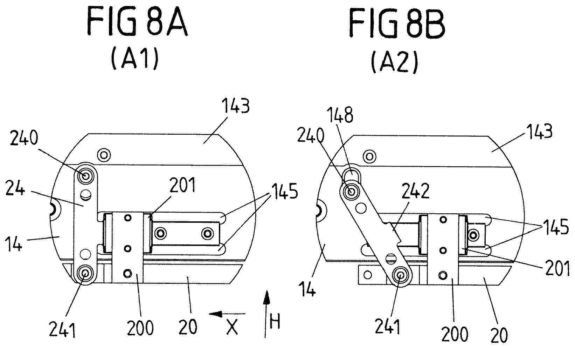

Fig. 5A-5C bis Fig. 8A, 8B zeigen ein weiteres Ausführungsbeispiel eines Fördersystems 1, das - mit Blick auf die Fördereinrichtung 10 - funktional wie das vorangehend anhand von Fig. 1 bis 4A, 4B beschriebene Ausführungsbeispiel ausgebildet ist, sich jedoch hinsichtlich der Fixiereinrichtung 2 von dem vorangehend beschriebenen Ausführungsbeispiel unterscheidet.

So weist bei dem Ausführungsbeispiel gemäß Fig. 5A-5C bis 8A, 8B die Fixiereinrichtung 2 ein Schienenelement 20 auf, das über mehrere Paare von Führungselementen 200 längs an Aussparungen 145 in Form von Langlöchern beidseits des Gehäuses 14 der Fördereinrichtung 10 geführt ist und somit längs entlang einer parallel zur Förderrichtung F gerichteten Verstellrichtung X an dem Gehäuse 14 verstellt werden kann. Ein jedes Führungselement 200 greift hierbei über ein Gleitelement 201 in die parallel zueinander erstreckten Langlöcher 145 an einem Gehäuseteil 141 in Form einer Gehäusewandung des Gehäuses 14 ein und führt darüber das Schienenelement 20 längs entlang der Verstellrichtung X an dem Gehäuse 14.

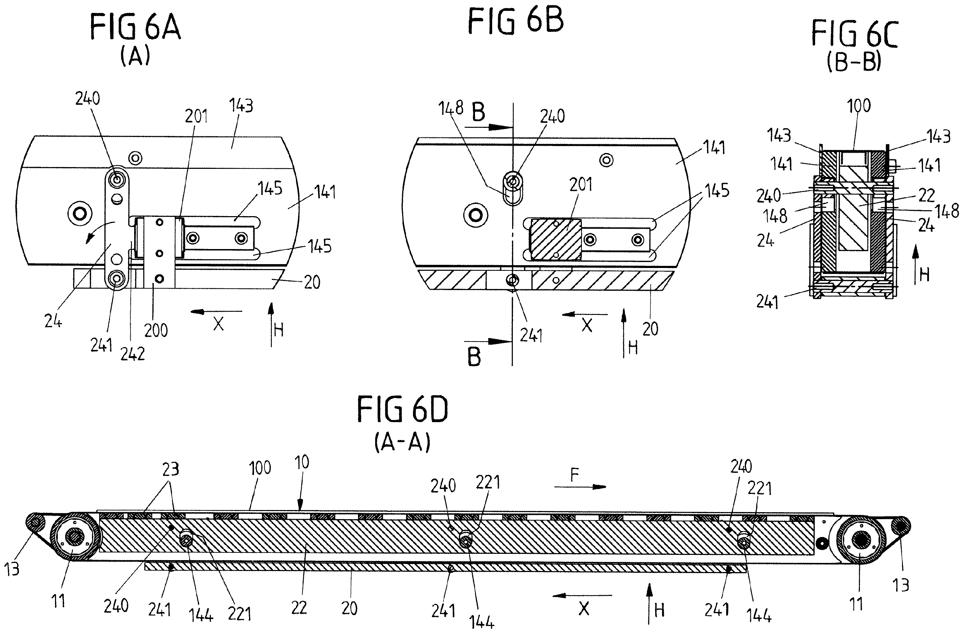

Das Schienenelement 20 ist über mehrere Paare von Hebelelementen 24, die axial entlang der Verstellrichtung X zueinander versetzt und somit entlang der Verstellrichtung X zueinander beabstandet sind, mit einem Trägerelement 22 (siehe Fig. 6D), das innerhalb des Gehäuses 40 eingefasst ist, gekoppelt. Die Hebelelemente 24 sind schwenkbar zum einen über eine Koppeleinrichtung 240 in Form eines Achselements mit dem Trägerelement 22 und zum anderen über eine Koppeleinrichtung 241 in Form eines Achselements mit dem Schienenelement 20 gekoppelt. Ein jedes Paar von Hebelelementen 24 ist hierbei durch zwei Hebelelemente 24 gebildet, die beidseits außerhalb des Gehäuses 14 angeordnet sind, wie dies insbesondere aus Fig. 6C ersichtlich ist.

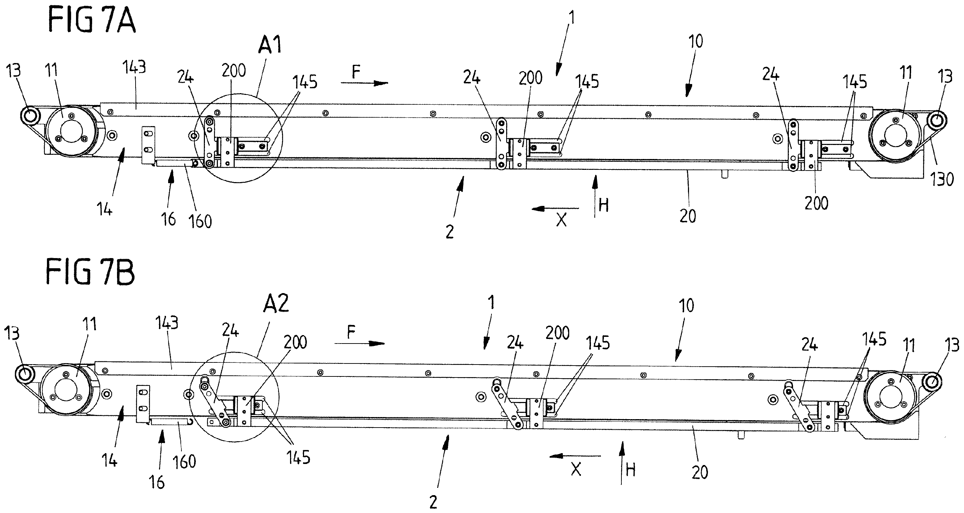

Bei einem Verstellen des Schienenelements 20 entlang der Verstellrichtung X wird die Koppeleinrichtung 240 in Form des Achselements axial in Position zu dem Gehäuse 14 gehalten, indem die Koppeleinrichtung 240 in Form des Achselements in Langlöchern 148 an dem Gehäusewandungen 141 des Gehäuses 14 einliegt und in diesen entlang der Hubrichtung H geführt ist, wie dies aus Fig. 7A, 7B und 8A, 8B ersichtlich ist. Bei einem Verschieben des Schienenelements 20 entlang der Verstellrichtung X wird somit ein jedes Hebelelement 24 um die Koppeleinrichtung 241 in Form des Achselements auf Seiten des Schienenelements 20 verschwenkt (Fig. 7B, 8B), und die Koppeleinrichtung 240 eines jeden Paares von Hebelelementen 24 wird in den zugeordneten Langlöchern 148 der Gehäusewandung 141 des Gehäuses 14 entlang der Hubrichtung H bewegt, sodass das Trägerelement 22 innerhalb des Gehäuses 14 entlang der Hubrichtung H verstellt wird.

Bei einem Verstellen des Schienenelements 20 in die Verstellrichtung X wird das Trägerelement 22, das über mehrere Langlöcher 221 des Trägerelements 22 durchgreifende, zwischen den Gehäusewandungen 141 erstreckte Bolzen 144 zusätzlich entlang der Hubrichtung H am Gehäuse 14 geführt ist, in die Hubrichtung H nach oben bewegt, sodass Magnetelemente 23 oberseitig des Trägerelements 22 von unten der Fördereinrichtung 10 in Form des Förderbands angenähert werden (siehe zum Beispiel Fig. 7A, 8A sowie Fig. 6D). Die Magnetelemente 23 werden somit in eine Fixierstellung gebracht, in der ein auf der Fördereinrichtung 10 befindliches Werkstück bei stillstehender Fördereinrichtung 10 axial in Position an der Fördereinrichtung 10 gehalten wird.

Wird das Schienenelement 20 umgekehrt entgegen der Verstellrichtung X zu dem Gehäuse 14 bewegt, so wird das Trägerelement 22 entgegen der Hubrichtung H abgesenkt, sodass die Magnetelemente 23 von der Fördereinrichtung 10 entfernt und somit aus der Fixierstellung in einer Lösestellung überführt werden, in der ein auf der Förderrichtung 10 befindliches Werkstück nicht (mehr) axial in Position gehalten wird (siehe Fig. 7B und 8B).

Aufgrund der Kopplung des Schienenelements 20 mit dem Trägerelement 22 über die Hebelelemente 24 ergibt sich eine vorteilhafte Krafteinleitung von dem Schienenelement 20 in das Trägerelement 22. Aufgrund der Verwendung und Ausrichtung der Hebelelemente 24 wird insbesondere zu Beginn eine Verstellbewegung des Schienenelements 20 zum Überführen des Trägerelements 22 aus der Fixierstellung entgegen der Hubrichtung H in Richtung der Lösestellung in untersetzter Weise in eine Bewegung des Trägerelements 22 übertragen. Zu Beginn der Verstellbewegung wird ein vergleichsweise großer Weg des Schienenelements 20 in einen vergleichsweise kleinen Weg des Trägerelements 22 aus der Fixierstellung heraus umgesetzt, was bewirkt, dass eine vergleichsweise kleine Verstellkraft an dem Schienenelement 20 ausreicht, um die Magnetelemente 23 aus ihrer magnetischen Anziehung mit einem Werkstück auf der Fördereinrichtung 10 zu bringen.

Zum Bewegen des Trägerelements 22 in die Fixierstellung wird das Schienenelement 20 demgegenüber in die Hubrichtung H bewegt und somit der Fördereinrichtung 10 angenähert.

Ist das Trägerelement 22 in die Fixierstellung gebracht worden, so ist ein jedes Hebelelement 24 über ein seitlich vorstehendes Anschlagelement 242 in Anlage mit einem jeweils zugeordneten Gleitelement 201 eines Führungselements 200, wie dies insbesondere aus Fig. 6A ersichtlich ist. Die axiale Stellung des Schienenelements 20 in der Fixierstellung des Trägerelements 22 ist somit definiert, sodass das Schienenelement 20 nicht über diese Stellung hinaus in die Verstellrichtung X bewegt werden kann.

Bei beiden vorangehend beschriebenen Ausführungsbeispielen kann das Verstellen des Schienenelements 20 beispielsweise auf elektromotorische Weise über einen (gesonderten) Antrieb erfolgen. Das Verstellen des Schienenelements 20 kann gegebenenfalls auch händisch erfolgen oder unter Verwendung eines hydraulischen oder pneumatischen Antriebs.

Beispielsweise kann vorgesehen sein, das Schienenelement 20 über eine in Fig. 7A, 7B dargestellte Vorspanneinrichtung 16 mit einem Federelement 160 in Richtung der angehobenen Stellung des Trägerelements 22 federmechanisch vorzuspannen. Dies ist jedoch nicht zwingend und lediglich beispielhaft zu verstehen.

Das Verstellen der Fixiereinrichtung 2 kann hierbei in gesteuerter Weise erfolgen.

So kann das Fördersystem 1 eine Erkennungseinrichtung 15 (siehe Fig. 1) aufweisen, die beispielsweise in Form einer Lichtschranke im Bereich der vorderen Antriebsrolle 11 angebracht sein kann. Mittels der Erkennungseinrichtung 15, die beispielsweise einen Lichtstrahl L an der vorderen Antriebsrolle 11 aufspannen kann, kann beispielsweise erkannt werden, ob ein Werkstück W diese vordere Position (betrachtet in Förderrichtung F) an der Auflagefläche 100 erreicht hat. Ist dies der Fall, kann der Antrieb 12 abgeschaltet und die Fördereinrichtung 10 somit gestoppt werden, um nunmehr die Fixiereinrichtung 2 zu betätigen und das Werkstück W in seiner gerade eingenommenen Stellung zu fixieren. Hierzu wird das Trägerelement 22 mit den daran angeordneten Magnetelementen 23 in die Hubrichtung H angehoben und somit der Auflagefläche 100 angenähert, sodass ein Werkstück W magnetisch in Position gehalten wird.

Ist ein Werkstück W fixiert, so kann es zunächst in seiner Position (exakt) vermessen werden, um die Position des Werkstücks W an der Auflagefläche 100 zu bestimmen (dies kann zum Beispiel aufgrund eines Nachlaufens des Antriebs 12 erforderlich sein). Nach dem Vermessen kann sodann eine automatisierte Bestückung des Werkstücks W (zum Beispiel eine Tragschiene) erfolgen, oder elektrische Geräte zum Beispiel in Form von Reihenklemmen an einer Tragschiene können in automatisierter Weise beschriftet oder mittels eines geeigneten Kamerasystems inspiziert werden.

Nach erfolgtem Fertigungsschritt wird die Fixiereinrichtung 2 sodann zurück in ihre Lösestellung überführt, sodass das Werkstück W weiter befördert werden kann.

Insbesondere kann ein Fördersystem der hier beschriebenen Art grundsätzlich zum Transportieren und Fixieren ganz unterschiedlicher Werkstücke verwendet werden und ist insofern nicht auf Tragschienen oder Klemmenleisten beschränkt.

Die Magnetelemente können beispielsweise durch Neodym-Magnete ausgebildet sein und können als gesonderte Elemente an einem Trägerelement montiert sein. Denkbar und möglich ist aber auch, eine Magnetanordnung zum Beispiel in Form eines Magnetbands einzusetzen. Denkbar ist darüber hinaus, das Trägerelement selbst permanentmagnetisch auszubilden.

Obwohl anhand einer Fördereinrichtung in Form eines Förderbands beschrieben, kann die Erfindung auch bei anderen Fördereinrichtungen verwendet werden, beispielsweise Fördereinrichtungen, die Ketten oder aneinander angereihte Rollenelemente oder dergleichen verwenden.

### Bezugszeichenliste

- 1: Fördersystem
- 10: Fördereinrichtung (Förderband)
- 100: Auflagefläche
- 11: Antriebsrollen
- 12: Antriebsmotor
- 13: Übergangsrollen
- 130: Riemenelement
- 14: Gehäuse
- 140, 141: Gehäuseteil
- 142: Spanneinrichtung
- 143: Längsführungselement
- 144: Hubführungselement (Bolzen)
- 145: Aussparung
- 146: Boden
- 147: Langloch
- 148: Aussparung (Langloch)
- 15: Erkennungseinrichtung (Lichtschranke)
- 16: Vorspanneinrichtung
- 160: Federelement
- 2: Fixiereinrichtung
- 20: Schienenelement
- 200: Führungselement
- 201: Gleitelement
- 21: Verstellelement
- 210: Kulisse
- 211: Eingriffsabschnitt
- 22: Trägerelement
- 220: Oberseite
- 221: Langloch
- 222: Koppelelement (Bolzen)
- 23: Magnetelement
- 230: Befestigungseinrichtung (Schraube)
- 24: Hebelelement
- 240: Koppeleinrichtung
- 241: Koppeleinrichtung
- 242: Anschlagelement
- F: Förderrichtung
- H: Hubrichtung
- L: Lichtstrahl
- V: Verschwenkrichtung
- W: Werkstück
- X: Verstellrichtung
- Y: Querrichtung

## Patentansprüche

1. Fördersystem (1) zum Fördern mindestens eines Werkstücks (W), mit einer Fördereinrichtung (10), an der das Werkstück (W) entlang einer Förderrichtung (F) förderbar ist, wobei eine Fixiereinrichtung (2), die zumindest ein Magnetelement (23) aufweist, das entlang einer von der Förderrichtung (F) unterschiedlichen Hubrichtung (H) zwischen einer Lösestellung und einer Fixierstellung verstellbar ist, wobei das zumindest eine Magnetelement (23) in der Fixierstellung der Fördereinrichtung (10) im Vergleich zur Lösestellung angenähert ist, um das Werkstück (W) in einer eingenommen Position an der Fördereinrichtung (10) zu fixieren, wobei die Fördereinrichtung (10) eine Auflagefläche (100), die entlang der Förderrichtung (F) und entlang einer quer zur Förderrichtung (F) und quer zur Hubrichtung (H) gerichteten Querrichtung (Y) erstreckt ist, als Auflage für das Werkstück (W) zum Fördern entlang der Förderrichtung (F) aufweist, wobei das zumindest eine Magnetelement (23) an einer der Auflagefläche (100) abgewandten Seite der Fördereinrichtung (10) angeordnet ist, wobei die Fixiereinrichtung (2) ein entlang der Förderrichtung (F) erstrecktes Trägerelement (22) aufweist, an dem das zumindest eine Magnetelement (23) angeordnet ist und das zusammen mit dem zumindest einen Magnetelement (23) entlang der Hubrichtung (H) verstellbar ist, **dadurch gekennzeichnet, dass** das Trägerelement (22) mit zumindest einem entlang der Förderrichtung (F) verstellbaren Verstellelement (21) gekoppelt ist, wobei durch Verstellen des zumindest einen Verstellelements (21) entlang der Förderrichtung (F) das Trägerelement (22) entlang der Hubrichtung (H) verstellbar ist, wobei dass das zumindest eine Verstellelement (21) über den Eingriff eines Koppelelements (222) in eine Kulisse (210) mit dem Trägerelement (22) gekoppelt ist, und dass die Kulisse (210) in einer durch die Förderrichtung (F) und die Hubrichtung (H) aufgespannten Ebene entlang einer gekrümmten Bahn erstreckt ist.

2. Fördersystem (1) zum Fördern mindestens eines Werkstücks (W), mit einer Fördereinrichtung (10), an der das Werkstück (W) entlang einer Förderrichtung (F) förderbar ist, wobei eine Fixiereinrichtung (2), die zumindest ein Magnetelement (23) aufweist, das entlang einer von der Förderrichtung (F) unterschiedlichen Hubrichtung (H) zwischen einer Lösestellung und einer Fixierstellung verstellbar ist, wobei das zumindest eine Magnetelement (23) in der Fixierstellung der Fördereinrichtung (10) im Vergleich zur Lösestellung angenähert ist, um das Werkstück (W) in einer eingenommen Position an der Fördereinrichtung (10) zu fixieren, wobei die Fördereinrichtung (10) eine Auflagefläche (100), die entlang der Förderrichtung (F) und entlang einer quer zur Förderrichtung (F) und quer zur Hubrichtung (H) gerichteten Querrichtung (Y) erstreckt ist, als Auflage für das Werkstück (W) zum Fördern entlang der Förderrichtung (F) aufweist, wobei das zumindest eine Magnetelement (23) an einer der Auflagefläche (100) abgewandten Seite der Fördereinrichtung (10) angeordnet ist, wobei die Fixiereinrichtung (2) ein entlang der Förderrichtung (F) erstrecktes Trägerelement (22) aufweist, an dem das zumindest eine Magnetelement (23) angeordnet ist und das zusammen mit dem zumindest einen Magnetelement (23) entlang der Hubrichtung (H) verstellbar ist, wobei ein Gehäuse (14) mit zwei längs entlang der Förderrichtung (F) erstreckten Gehäuseteilen (141), zwischen denen das Trägerelement (22) aufgenommen ist, **dadurch gekennzeichnet, dass** die Fixiereinrichtung (2) zumindest ein Hebelelement (24) aufweist, das verschwenkbar mit dem Trägerelement (22) verbunden ist, wobei durch Verschwenken des zumindest einen Hebelelements (24) das Trägerelement (22) entlang der Hubrichtung (H) verstellbar ist und, dass das zumindest eine Hebelelement (24) an einem entlang der Förderrichtung (F) zu einem Gehäuseteil (141) des Fördersystems (1) verstellbaren Schienenelement (20) schwenkbar angeordnet ist derart, dass durch Verstellen des Schienenelements (20) entlang der Förderrichtung (F) das zumindest eine Hebelelement (24) zum Verstellen des Trägerelements (22) entlang der Hubrichtung (H) verschwenkbar ist, und dadurch, dass das Trägerelement (22) entlang der Hubrichtung (H) an dem Gehäuse (14) der Fördereinrichtung (10) längs geführt ist durch Eingriff eines Bolzens (240) in ein zugeordnetes, entlang der Hubrichtung (H) erstrecktes Langloch (148).

3. Fördersystem (1) nach Anspruch 1 oder 2, **dadurch gekennzeichnet, dass** die Hubrichtung (H) senkrecht zur Auflagefläche (100) gerichtet ist.

4. Fördersystem (1) nach einem der Ansprüche 1 bis 3, **dadurch gekennzeichnet, dass** mehrere Magnetelemente (23) entlang der Förderrichtung (F) zueinander versetzt an dem Trägerelement (22) angeordnet sind.

5. Fördersystem (1) nach Anspruch 2, **dadurch gekennzeichnet, dass** das Trägerelement (22) entlang der Hubrichtung (H) an zumindest einem der Gehäuseteile (141) geführt ist.

6. Fördersystem (1) nach Anspruch 1, **dadurch gekennzeichnet, dass** das zumindest eine Verstellelement (21) an einem Gehäuseteil (141) des Fördersystems (1) längs entlang der Förderrichtung (F) geführt ist.

7. Fördersystem (1) nach Anspruch 1, **dadurch gekennzeichnet, dass** das Trägerelement (22) mit zumindest zwei entlang der Förderrichtung (F) zueinander versetzten, gemeinsam entlang der Förderrichtung (F) verstellbaren Verstellelementen (21) gekoppelt ist.

8. Fördersystem (1) nach Anspruch 1, **dadurch gekennzeichnet, dass** das Trägerelement (22) zwischen einem Paar von quer zur Förderrichtung (F) und quer zur Hubrichtung (H) zueinander versetzten Verstellelementen (21) angeordnet ist, die jeweils mit dem Trägerelement (22) gekoppelt sind.

9. Fördersystem (1) nach Anspruch 1, **dadurch gekennzeichnet, dass** das zumindest eine Verstellelement (21) an einem entlang der Förderrichtung (F) erstreckten, verstellbaren Schienenelement (20) angeordnet sind.

10. Fördersystem (1) nach Anspruch 2, **dadurch gekennzeichnet, dass** das Schienenelement (20) über zumindest ein Führungselement (200) längs entlang der Förderrichtung (F) an dem Gehäuseteil (141) des Fördersystems (1) geführt ist.

11. Fördersystem (1) nach Anspruch 10, **dadurch gekennzeichnet, dass** das zumindest eine Hebelelement (24) in der Fixierstellung mit dem zumindest einen Führungselement (21) in Anlage ist.

12. Fördersystem (1) nach Anspruch 2, **dadurch gekennzeichnet, dass** das Schienenelement (24) über mehrere Hebelelemente (4) mit dem Trägerelement (22) gekoppelt ist.

13. Fördersystem (1) nach einem der vorangehenden Ansprüche, **gekennzeichnet durch** zumindest eine an der Fördereinrichtung (10) angeordneten Erkennungseinrichtung (15) zum Erkennen der Position des Werkstücks (W) auf der Fördereinrichtung (10).

14. Verfahren zum Betreiben eines Fördersystems (1) nach einem der Ansprüche 1 bis 13 zum Fördern mindestens eines Werkstücks (W), bei dem das Werkstück (W) entlang einer Förderrichtung (F) an einer Fördereinrichtung (10) gefördert wird, wobei zum Fixieren des Werkstücks (W) in einer eingenommen Position an der Fördereinrichtung (10) zumindest ein Magnetelement (23) einer Fixiereinrichtung (2) entlang einer von der Förderrichtung (F) unterschiedlichen Hubrichtung (H) zwischen einer Lösestellung und einer Fixierstellung verstellt wird, wobei das zumindest eine Magnetelement (23) in der Fixierstellung der Fördereinrichtung (10) im Vergleich zur Lösestellung angenähert ist, wobei die Fixiereinrichtung (2) zumindest ein Hebelelement (24) aufweist, das verschwenkbar mit dem Trägerelement (22) verbunden ist, wobei durch Verschwenken des zumindest einen Hebelelements (24) das Trägerelement (22) entlang der Hubrichtung (H) verstellt wird und, dass das zumindest eine Hebelelement (24) an einem entlang der Förderrichtung (F) zu einem Gehäuseteil (141) des Fördersystems (1) verstellbaren Schienenelement (20) schwenkbar angeordnet wird derart, dass durch Verstellen des Schienenelements (20) entlang der Förderrichtung (F) das zumindest eine Hebelelement (24) zum Verstellen des Trägerelements (22) entlang der Hubrichtung (H) verschwenkt wird, und dadurch, dass das Hebelelement zum einen über eine Koppeleinrichtung (240) in Form eines Achselements mit dem Trägerelement (22) verschwenkt wird und zum anderen über eine Koppeleinrichtung (241) in Form eines Achselements mit dem Schienenelement (20) gekoppelt wird, wobei durch Verstellen des Schienenelements (20) die Koppeleinrichtung (240) des Hebelelements (24) in einem zugeordneten Langloch (148) eines der Gehäuseteile (141) des Gehäuses (14) entlang der Hubrichtung (H) bewegt wird, sodass das Trägerelement (22) innerhalb des Gehäuses (14) entlang der Hubrichtung (H) verstellt wird.

15. Verfahren nach Anspruch 14, **dadurch gekennzeichnet, dass** die Fördereinrichtung (10) zum Fixieren des Werkstücks (W) angehalten wird.

16. Verfahren nach Anspruch 14 oder 15, **dadurch gekennzeichnet, dass** die Fördereinrichtung (10) angehalten wird, wenn mittels einer Erkennungseinrichtung (15) erkannt wird, dass das Werkstück (W) beim Fördern an der Fördereinrichtung (10) eine vorbestimmte Position erreicht hat.

## Claims

1. Conveying system (1) for conveying at least one workpiece (W), having a conveying device (10) on which the workpiece (W) can be conveyed along a conveying direction (F), wherein a fixing device (2) which has at least one magnetic element (23) which can be displaced along a lifting direction (H), which is different from the conveying direction (F), between a release position and a fixing position, wherein the at least one magnetic element (23) is brought closer in the fixing position to the conveying device (10) than in the release position in order to fix the workpiece (W) in an assumed position on the conveying device (10), wherein the conveying device (10) has a support surface (100), which extends along the conveying direction (F) and along a transverse direction (Y) directed transversely to the conveying direction (F) and transversely to the lifting direction (H), as support for the workpiece (W) for conveying along the conveying direction (F), wherein the at least one magnetic element (23) is arranged on a side of the conveying device (10) that faces away from the support surface (100), wherein the fixing device (2) has a carrier element (22) which extends along the conveying direction (F) and on which the at least one magnetic element (23) is arranged and which, together with the at least one magnetic element (23) can be displaced along the lifting direction (H), **characterized in that** the carrier element (22) is coupled to at least one displacement element (21) which can be displaced along the conveying direction (F), wherein the carrier element (22) can be displaced along the lifting direction (H) by displacing the at least one displacement element (21) along the conveying direction (F), wherein **in that** the at least one displacement element (21) is coupled to the carrier element (22) by means of the engagement of a coupling element (222) in a slotted guide (210), and **in that** the slotted guide (210) extends along a curved path in a plane defined by the conveying direction (F) and the lifting direction (H).

2. Conveying system (1) for conveying at least one workpiece (W), having a conveying device (10) on which the workpiece (W) can be conveyed along a conveying direction (F), wherein a fixing device (2) which has at least one magnetic element (23) which can be displaced along a lifting direction (H), which is different from the conveying direction (F), between a release position and a fixing position, wherein the at least one magnetic element (23) is brought closer in the fixing position to the conveying device (10) than in the release position in order to fix the workpiece (W) in an assumed position on the conveying device (10), wherein the conveying device (10) has a support surface (100), which extends along the conveying direction (F) and along a transverse direction (Y) directed transversely to the conveying direction (F) and transversely to the lifting direction (H), as support for the workpiece (W) for conveying along the conveying direction (F), wherein the at least one magnetic element (23) is arranged on a side of the conveying device (10) that faces away from the support surface (100), wherein the fixing device (2) has a carrier element (22) which extends along the conveying direction (F) and on which the at least one magnetic element (23) is arranged and which, together with the at least one magnetic element (23) can be displaced along the lifting direction (H), wherein a housing (14) having two housing parts (141) which extend longitudinally along the conveying direction (F) and between which the carrier element (22) is received, **characterized in that** the fixing device (2) has at least one lever element (24) which is pivotably connected to the carrier element (22), wherein the carrier element (22) can be displaced along the lifting direction (H) by pivoting the at least one lever element (24), and **in that** the at least one lever element (24) is arranged pivotably on a rail element (20) which can be displaced along the conveying direction (F) with respect to a housing part (141) of the conveying system (1), in such a way that, by displacing the rail element (20) along the conveying direction (F), the at least one lever element (24) can be pivoted to displace the carrier element (22) along the lifting direction (H), and **in that** the carrier element (22) is guided longitudinally along the lifting direction (H) on the housing (14) of the conveying device (10) by engagement of a bolt (240) in an associated slot (148) extending along the lifting direction (H).

3. Conveying system (1) according to Claim 1 or 2, **characterized in that** the lifting direction (H) is directed perpendicularly to the support surface (100).

4. Conveying system (1) according to one of Claims 1 to 3, **characterized in that** a plurality of magnetic elements (23) are arranged on the carrier element (22) so as to be offset with respect to one another along the conveying direction (F).

5. Conveying system (1) according to Claim 2, **characterized in that** the carrier element (22) is guided along the lifting direction (H) on at least one of the housing parts (141).

6. Conveying system (1) according to Claim 1, **characterized in that** the at least one displacement element (21) is guided on a housing part (141) of the conveying system (1) longitudinally along the conveying direction (F).

7. Conveying system (1) according to Claim 1, **characterized in that** the carrier element (22) is coupled to at least two displacement elements (21) which are offset with respect to one another along the conveying direction (F) and which can be displaced together along the conveying direction (F).

8. Conveying system (1) according to Claim 1, **characterized in that** the carrier element (22) is arranged between a pair of displacement elements (21) which are offset with respect to one another transversely to the conveying direction (F) and transversely to the lifting direction (H) and which are each coupled to the carrier element (22).

9. Conveying system (1) according to Claim 1, **characterized in that** the at least one displacement element (21) is arranged on a displaceable rail element (20) which extends along the conveying direction (F).

10. Conveying system (1) according to Claim 2, **characterized in that** the rail element (20) is guided via at least one guide element (200) longitudinally along the conveying direction (F) on the housing part (141) of the conveying system (1).

11. Conveying system (1) according to Claim 10, **characterized in that** the at least one lever element (24), in the fixing position, is in contact with the at least one guide element (21).

12. Conveying system (1) according to Claim 2, **characterized in that** the rail element (24) is coupled to the carrier element (22) via a plurality of lever elements (4).

13. Conveying system (1) according to one of the preceding claims, **characterized by** at least one recognition device (15) which is arranged on the conveying device (10) and is intended for recognizing the position of the workpiece (W) on the conveying device (10).

14. Method for operating a conveying system (1) according to one of Claims 1 to 13 for conveying at least one workpiece (W), in which the workpiece (W) is conveyed along a conveying direction (F) on a conveying device (10), wherein, in order to fix the workpiece (W) in an assumed position on the conveying device (10), at least one magnetic element (23) of a fixing device (2) is displaced along a lifting direction (H), which is different from the conveying direction (F), between a release position and a fixing position, wherein the at least one magnetic element (23) is brought closer in the fixing position to the conveying device (10) than in the release position, wherein the fixing device (2) has at least one lever element (24) which is pivotably connected to the carrier element (22), wherein the carrier element (22) is displaced along the lifting direction (H) by pivoting the at least one lever element (24), and in that the at least one lever element (24) is arranged pivotably on a rail element (20) which can be displaced along the conveying direction (F) with respect to a housing part (141) of the conveying system (1), in such a way that, by displacing the rail element (20) along the conveying direction (F), the at least one lever element (24) is pivoted to displace the carrier element (22) along the lifting direction (H), and in that the lever element is, on the one hand, pivoted with the carrier element (22) via a coupling device (240) in the form of an axle element and is, on the other hand, coupled to the rail element (20) via a coupling device (241) in the form of an axle element, wherein, by displacing the rail element (20), the coupling device (240) of the lever element (24) is moved in an associated slot (148) in one of the housing parts (141) of the housing (14) along the lifting direction (H), with the result that the carrier element (22) is displaced within the housing (14) along the lifting direction (H).

15. Method according to Claim 14, **characterized in that** the conveying device (10) is halted in order to fix the workpiece (W).

16. Method according to Claim 14 or 15, **characterized in that** the conveying device (10) is halted if it is recognized by means of a recognition device (15) that the workpiece (W) has reached a predetermined position during conveyance on the conveying device (10).

## Revendications

1. Système de transport (1) destiné à transporter au moins une pièce à usiner (W), comportant un dispositif de transport (10) sur lequel la pièce à usiner (W) est transportable le long d'un sens de transport (F), dans lequel un dispositif de fixation (2) qui présente au moins un élément magnétique (23) qui est déplaçable le long d'un sens de levage (H) différent du sens de transport (F) entre une position de relâchement et une position de fixation, l'au moins un élément magnétique (23), dans la position de fixation, s'approchant du dispositif de transport (10) comparativement à la position de relâchement pour fixer la pièce à usiner (W) dans une position prise au niveau du dispositif de transport (10), le dispositif de transport (10) présentant une surface d'appui (100) qui s'étend le long du sens de transport (F) et le long d'un sens transversal (Y) orienté transversalement au sens de transport (F) et transversalement au sens de levage (H) et sert de support pour la pièce à usiner (W) pour le transport le long du sens de transport (F), l'au moins un élément magnétique (23) étant disposé sur une face détournée de la surface d'appui (100) du dispositif de transport (10), le dispositif de fixation (2) présentant un élément porteur (22) s'étendant le long du sens de transport (F) et au niveau duquel l'au moins un élément magnétique (23) est disposé et qui est déplaçable avec l'au moins un élément magnétique (23) le long du sens de levage (H),
**caractérisé en ce que** l'élément porteur (22) est couplé à au moins un élément de réglage (21) déplaçable le long du sens de transport (F), l'élément porteur (22) étant déplaçable le long du sens de levage (H) par déplacement de l'au moins un élément de réglage (21) le long du sens de transport (F), dans lequel **en ce que** l'au moins un élément de réglage (21), par l'engrènement d'un élément de couplage (222) dans une coulisse (210), est couplé à l'élément porteur (22) et **en ce que** la coulisse (210) s'étend dans un plan circonscrit par le sens de transport (F) et le sens de levage (H) le long d'une bande courbée.

2. Système de transport (1) destiné à transporter au moins une pièce à usiner (W), comportant un dispositif de transport (10) sur lequel la pièce à usiner (W) est transportable le long d'un sens de transport (F), dans lequel un dispositif de fixation (2) qui présente au moins un élément magnétique (23) qui est déplaçable le long d'un sens de levage (H) différent du sens de transport (F) entre une position de relâchement et une position de fixation, l'au moins un élément magnétique (23), dans la position de fixation, s'approchant du dispositif de transport (10) comparativement à la position de relâchement pour fixer la pièce à usiner (W) dans une position prise au niveau du dispositif de transport (10), le dispositif de transport (10) présentant une surface d'appui (100) qui s'étend le long du sens de transport (F) et le long d'un sens transversal (Y) orienté transversalement au sens de transport (F) et transversalement au sens de levage (H) et sert de support pour la pièce à usiner (W) pour le transport le long du sens de transport (F), l'au moins un élément magnétique (23) étant disposé sur une face détournée de la surface d'appui (100) du dispositif de transport (10), le dispositif de fixation (2) présentant un élément porteur (22) s'étendant le long du sens de transport (F) et au niveau duquel l'au moins un élément magnétique (23) est disposé et qui est déplaçable avec l'au moins un élément magnétique (23) le long du sens de levage (H), dans lequel un boîtier (14) comportant deux parties de boîtier (141) s'étendant longitudinalement le long du sens de transport (F) entre lesquelles l'élément porteur (22) est reçu,
**caractérisé en ce que** le dispositif de fixation (2) présente au moins un élément de levage (24) qui est raccordé de manière pivotable à l'élément porteur (22), l'élément porteur (22) étant déplaçable le long du sens de levage (H) par pivotement de l'au moins un élément de levage (24), et **en ce que** l'au moins un élément de levage (24) est disposé de manière pivotable au niveau d'un éléments à rails (20) déplaçable le long du sens de transport (F) vers une partie de boîtier (141) du système de transport (1) de manière à ce que, par déplacement de l'élément à rails (20) le long du sens de transport (F), l'au moins un élément de levage (24) soit pivotable pour déplacer l'élément porteur (22) le long du sens de levage (H), et **en ce que** l'élément porteur (22) est guidé en longueur le long du sens de levage (H) au niveau du boîtier (14) du dispositif de transport (10) par engrènement d'un goujon (240) dans un trou oblong associé (148) s'étendant le long du sens de levage (H).

3. Système de transport (1) selon la revendication 1 ou 2, **caractérisé en ce que** le sens de levage (H) est orienté perpendiculairement à la surface d'appui (100).

4. Système de transport (1) selon une des revendications 1 à 3, **caractérisé en ce que** plusieurs éléments magnétiques (23) sont disposés le long du sens de transport (F) de manière décalée les uns par rapport aux autres au niveau de l'élément porteur (22).

5. Système de transport (1) selon la revendication 2, **caractérisé en ce que** l'élément porteur (22) est guidé le long du sens de levage (H) au niveau d'au moins une des parties de boîtier (141).

6. Système de transport (1) selon la revendication 1, **caractérisé en ce que** l'au moins un élément de réglage (21) est guidé au niveau d'une partie de boîtier (141) du système de transport (1) longitudinalement le long du sens de transport (F).

7. Système de transport (1) selon la revendication 1, **caractérisé en ce que** l'élément porteur (22) est couplé à au moins deux éléments de réglage (21) décalés l'un par rapport à l'autre le long du sens de transport (F) et déplaçables ensemble le long du sens de transport (F).

8. Système de transport (1) selon la revendication 1, **caractérisé en ce que** l'élément porteur (22) est disposé entre une paire d'éléments de réglage (21) décalés l'un par rapport à l'autre transversalement au sens de transport (F) et transversalement au sens de levage (H) et qui sont respectivement couplés à l'élément porteur (22).

9. Système de transport (1) selon la revendication 1, **caractérisé en ce que** l'au moins un élément de réglage (21) est disposé au niveau d'un élément à rails (20) déplaçable s'étendant le long du sens de transport (F).

10. Système de transport (1) selon la revendication 2, **caractérisé en ce que** l'élément à rails (20) est guidé par au moins un élément de guidage (200) longitudinalement le long du sens de transport (F) au niveau de la partie de boîtier (141) du système de transport (1).

11. Système de transport (1) selon la revendication 10, **caractérisé en ce que** l'au moins un élément de levage (24), dans la position de fixation, est en contact avec l'au moins un élément de guidage (21).

12. Système de transport (1) selon la revendication 2, **caractérisé en ce que** l'élément à rails (24) est couplé par plusieurs éléments de levage (4) à l'élément porteur (22).

13. Système de transport (1) selon une des revendications précédentes, **caractérisé par** au moins un dispositif de détection (15) disposé au niveau du dispositif de transport (10) pour détecter la position de la pièce à usiner (W) sur le dispositif de transport (10).

14. Procédé d'utilisation d'un système de transport (1) selon une des revendications 1 à 13 pour transporter au moins une pièce à usiner (W), dans lequel la pièce à usiner (W) est transportée le long d'un sens de transport (F) au niveau d'un dispositif de transport (10), dans lequel, pour fixer la pièce à usiner (W) dans une position prise au niveau du dispositif de transport (10), au moins un élément magnétique (23) d'un dispositif de fixation (2) est déplacé le long d'un sens de levage (H) différent du sens de transport (F) entre une position de relâchement et une position de fixation, l'au moins un élément magnétique (23), dans la position de fixation, s'approchant du dispositif de transport (10) comparativement à la position de relâchement, le dispositif de fixation (2) présentant au moins un élément de levage (24) qui est raccordé de manière pivotable à l'élément porteur (22), l'élément porteur (22) étant déplacé le long du sens de levage (H) par pivotement de l'au moins un élément de levage (24), et en ce que l'au moins un élément de levage (24) est disposé de manière pivotable au niveau d'un élément à rails (20) déplaçable le long du sens de transport (F) vers une partie de boîtier (141) du système de transport (1) de manière à ce que, par déplacement de l'élément à rails (20) le long du sens de transport (F), l'au moins un élément de levage (24) soit pivoté pour déplacer l'élément porteur (22) le long du sens de levage (H), et en ce que l'élément de levage est pivoté d'une part par le biais d'un dispositif de couplage (240) sous la forme d'un élément d'axe avec l'élément porteur (22) et d'autre part est couplé par le biais d'un dispositif de couplage (241) sous la forme d'un élément d'axe à l'élément à rails (20), le dispositif de couplage (240) de l'élément de levage (24) étant déplacé par déplacement de l'élément à rails (20) dans un trou oblong associé (148) d'une des parties de boîtier (141) du boîtier (14) le long du sens de levage (H), de sorte que l'élément porteur (22) est déplacé dans le boîtier (14) le long du sens de levage (H).

15. Procédé selon la revendication 14, **caractérisé en ce que** le dispositif de transport (10) est arrêté pour fixer la pièce à usiner (W).

16. Procédé selon la revendication 14 ou 15, **caractérisé en ce que** le dispositif de transport (10) est arrêté s'il est détecté au moyen d'un dispositif de détection (15) que la pièce à usiner (W) a atteint une position prédéfinie lors de son transport au niveau du dispositif de transport (10).
